Europäisches Patentamt

**European Patent Office**

**Office européen des brevets**

(19)

(11) Veröffentlichungsnummer : **0 074 033**
**B1**

(12) **EUROPÄISCHE PATENTSCHRIFT**

(45) Veröffentlichungstag der Patentschrift :
**07.05.86**

(21) Anmeldenummer : **82107882.1**

(22) Anmeldetag : **27.08.82**

(51) Int. Cl.⁴ : **G 11 B 15/60**, G 11 B 23/04,
H 05 F 3/00, G 11 B 23/50

(54) **Bandführungsvorrichtung für Magnetbänder, insbesondere Video-magnetbänder, Magnetbandkassetten mit solcher Bandführungsvorrichtung und Bandführungselemente dafür.**

(30) Priorität : **03.09.81 DE 3134894**

(43) Veröffentlichungstag der Anmeldung :
**16.03.83 Patentblatt 83/11**

(45) Bekanntmachung des Hinweises auf die Patenterteilung : **07.05.86 Patentblatt 86/19**

(84) Benannte Vertragsstaaten :
**AT BE CH DE FR GB IT LI NL SE**

(56) Entgegenhaltungen :
**CH-A-  278 618
DE-A- 3 010 772
FR-A-   966 128
GB-A-   618 577
US-A- 3 062 464
US-A- 3 799 422
PATENTS ABSTRACTS OF JAPAN, Band 2, Nr. 109, 9. September 1978, Seite 5886E78**

(73) Patentinhaber : **BASF Aktiengesellschaft
Carl-Bosch-Strasse 38
D-6700 Ludwigshafen (DE)**

(72) Erfinder : **Roos, Roland
Philipp-Scheidemann-Strasse 24
D-6700 Ludwigshafen (DE)**
Erfinder : **Schomann, Klaus Dieter, Dr.
Kopernikusstrasse 47
D-6700 Ludwigshafen (DE)**
Erfinder : **Muenzner, Wulf, Dr.
Lorscher Ring 10
D-6710 Frankenthal (DE)**

Jouve, 18, rue St-Denis, 75001 Paris, France

**Beschreibung**

Die Erfindung betrifft eine Bandführungsvorrichtung für Magnetbänder, insbesondere Videomagnetbänder, bestehend aus mindestens zwei elektrisch voneinander isolierten Bandführungselementen, die mit der Folienseite bzw. mit der Schichtseite des Magnetbandes wenigstens teilweise in Kontakt stehen, wobei das Magnetband eine Folienseiten-Ladungsaffinität und eine Schichtseiten-Ladungsaffinität aufweist.

Die Erfindung bezieht sich weiterhin auf Magnetbandkassetten sowie Bandführungselemente für Bandführungsvorrichtungen.

Bandführungseinrichtungen sind von Magnetbandgeräten für die Audio-, Video- und Datensignalaufzeichnung vielfältig bekannt. Es sind auch die verschiedensten Bandführungseinrichtungen wir Rollen, Zapfen u.s.w. in Magnetbandkassetten bekannt.

Es ist ferner bekannt, daß mit der Erhöhung der Bandlaufgeschwindigkeiten auch die elektrostatischen Aufladungen der in Bewegungskontakt befindlichen Teile, wie Band und Bandführungsvorrichtungen, vergrößert werden und Kleben des Bandes an den Vorrichtungen auftritt, insbesondere beim Anlaufen von Magnetbandgeräten.

Es ist mit der DE-OS 30 10 772 für Magnetband-Kassetten für die Audio-Aufzeichnung auf Metallfilm-Magnetband bekannt, innerhalb der Kassette ein Entladungs- und Erdanschlußglied anzuordnen, das eine Leitverbindung von der Schichtseite des Magnetbandes mit Masse, hier einem Geräte-Erdpotentialanschluß herstellt. Die Verwendung eines solchen speziellen Gliedes erfordert Änderungen an der Kassette und eine Anpassung des Geräts, was wegen des damit verbundenen Aufwands bei einem fertigen Kassettensystem vermieden werden muß. Dabei ist sehr nachteilig, daß die Ladungsabführung von zwei in Reibungs- oder « Ladungskontakt » stehenden Oberflächen die Ladungsdifferenz an den Oberflächen und damit die auftretenden elektrostatischen Kräfte noch vergrößert.

Es ist mit der US-PS 3 062 464 weiterhin für einen Bandtransport mit Bandschleifenspeicher bekannt, Kleben des Bandes an der Wandung des Speicherraumes durch Versehen der Wandung mit einer rauhen, nicht gut leitenden Schicht zu vermeiden, wobei durch die Rauhigkeit die Ausbildung von Reibungselektrizität verringert und über Ladungsabzug durch das Schichtmaterial gegebenenfalls auf dem Band schon vorhandene Ladung entfernt wird.

Eine Verwendung solcher rauher Materialien ist für größere Wandflächen als eine Art Farbanstrich bekannt. Ein Hinweis auf eine Verwendung bei Bandführungselementen der vorliegenden Erfindung liegt nicht vor, und diese liegt nicht nahe.

Bei Videokassetten wurde festgestellt, daß ein Magnetband mit einer bestimmten Magnetschicht beim Umspulen des Bandes zumindest zeitweise an den Führungsrollen und -zapfen klebte.

Es ist die Aufgabe der vorliegenden Erfindung, diesen Klebeeffekt zu beseitigen und darüber hinaus für alle Magnetbandeinrichtungen, insbesondere Magnetbandkassetten, Vorkehrungen zu treffen, die das Auftreten solcher Klebeeffekte von vornherein mindestens verringern, wenn nicht sogar völlig ausschließen.

Die Erfindung löst die Aufgabe mit einer Bandführungsvorrichtung der eingangs genannten Art dadurch, daß der Bandfolienseite zugeordnete Kontaktteile der Bandführungselemente aus einem Material bestehen, das an der Oberfläche eine der Folienseiten-Ladungsaffinität im wesentlichen entsprechende Ladungsaffinität besitzt und daß der Bandschichseite zugeordnete Kontaktteile des zweiten Bandführungselementes von Masse isoliert sind und aus einem Material bestehen, das an der Oberfläche höchstens eine der Schichtseiten-Ladungsaffinität entsprechende Ladungsaffinität aufweist.

Die Ladungsaffinität ist, wie in der folgenden Beschreibung angegeben, entweder im Abreißversuch oder durch Messung des jeweiligen Oberflächenwiderstandes bestimmbar.

Unter « Kontaktteilen » werden die Teile des Bandführungselements verstanden, die wenigstens zeitweise mit Flächenteilen des Magnetbandes in Kontakt stehen. Dadurch wird die Möglichkeit, daß sich unterschiedliche Ladungsmengen auf Band und Element aufbauen können, zumindest erschwert. Praktisch läßt sich diese Vorschrift erfüllen, wenn die Bandführungselemente aus widerstandsmäßig entsprechend ausgewählten Werkstoffen gefertigt werden oder ein Austausch vorgenommen wird.

Eine Magnetbandkassette mit Bandführungselementen für die Bandschichtseite und für die Bandfolienseite läßt sich erfindungsgemäß ausbilden, wenn die Kontaktteile des Elements für die Bandschichtseite aus einem leitenden oder schlecht isolierenden Material und das Element für die Bandfolienseite aus einem gut isolierenden Material bestehen.

Eine Magnetbandkassette mit Chromdioxid-Magnetband und mit Bandführungselementen für die Chromdioxidmagnetschichtseite und für die Bandfolienseite läßt sich erfindungsgemäß vorteilhaft ausbilden, wenn die Kontaktteile des Elements für die Bandschichtseite aus Metall und des Elements für die Bandfolienseite aus einem Isolator bestehen.

Dadurch lassen sich die Magnetbandkassetten, insbesondere solche Kassetten, in denen hohe Bandwickelgeschwindigkeiten auftreten, gegen elektrostatische Aufladungen gesichert ausbilden, so daß Bandlauf und Bandwickelprobleme vermieden werden, die sonst zu hörbaren und/oder sichtbaren Wiedergabefehlern führen können.

Es ist auch einfach ein Austausch der kompletten Führungselemente oder nur ihrer Oberflächen z. B.

durch Überschieben mit einer Hülse oder Überkleben mit einer Folie aus erfindungsgemäß angepaßtem Material zu bewerkstelligen.

Ein solches Bandführungselement, dazu bestimmt, mit der Folienseite bzw. mit der Schichtseite eines Magnetbandes wenigstens teilweise in Kontakt zu stehen, zur Verwendung in einer Bandführungsvorrichtung nach Patentansprüchen 1 und 2 oder 9, ist erfindungsgemäß so ausgebildet, daß die Kontaktteile aus nicht metallischem Material mit einem Oberflächenwiderstand im Bereich bis $10^5$ Ω und die Kontaktteile für die Bandfolienseite aus isolierendem Material bestehen.

Dadurch wird durch Reibung an den Führungselementen eine elektrostatische Aufladung von vornherein nur in vernachlässigbarem Ausmaße erzeugt.

Unter « nicht metallisch » wird hierbei verstanden, daß das Material nicht gut leitend oder halbleitend ist.

Außerdem wird der Vorteil erhalten, daß vom Magnetband transportierte Ladung durch das Material abgeleitet werden kann, so daß sich die gesamte Ladungsmenge im Bandsystem, sei es auf einem Magnetbandgerät oder in einer Bandkassette, reduzieren läßt.

Es ist erfindungsgemäß auch vorteilhaft, die der Schichtseite zugeordneten Kontaktteile der Führungselemente aus einem, mit elektrisch leitendem Zusatzmaterial, wie z. B. Graphit oder Kohle, versehenen Kunststoffmaterial auszubilden. Zweckmäßig besteht das Kunststoffmaterial aus 80 bis 50 Gewichtsprozent Polyethylen oder Polypropylen oder vorzugsweise Polyoxymethylen mit einem Zusatz von 20 bis 50 Gewichtsprozent Graphit oder Kohle.

Dabei ist die Möglichkeit gegeben, die Leitfähigkeit der Kontaktteile im Bereich von nahezu einem « Fastleiter » zu einem Isolator durch entsprechende Zusatzmengen variieren zu können.

Ebenso verringern sich die Reibkräfte zwischen Bandoberfläche (Folie oder Schicht) und den Umlenkelementen, wodurch das Magnetband geschont wird und eine größere Lebensdauer erreicht wird.

Es ist dadurch auch möglich, die Oberflächenbeschaffenheiten von Führungselementen und Magnetband in weiten Grenzen zu variieren, also auch die Führungselemente in Bezug auf ihre Rauhigkeit den üblichen Rauhigkeiten der Folien, die bei Videobändern unter 0,5 μm liegen, anzupassen.

Die Kontaktteile des mindestens einen Bandführungselementes, das mit der Bandschichtseite des Magnetbandes wenigstens teilweise in Kontakt steht und von Masse isoliert ist, können erfindungsgemäß aus einem oberflächenwiderstandsmäßig gleichen Material wie die Bandschicht bestehen, insbesondere aus Chromdioxid-Magnetteilchen in einem Bindemittel.

Ebenso können die Kontaktteile des mindestens einen Bandführungselementes, das mit der Folienseite des Magnetbandes in Kontakt steht, von Masse isoliert sein und mit Folienmaterial versehen sein, das in Bezug auf die Ladungsaffinität dem Folienmaterial des Magnetbandes im wesentlichen entspricht.

Dadurch wird eine sehr sichere Materialanpassung im Sinne vorliegender Erfindung möglich.

Wird ein solches Bandsystem, im wesentlichen bestehend aus einer Abwickelrolle, den Bandführungselementen für Schicht- und/oder Folienseite und der Aufwickelrolle, betrachtet, so können elektrostatische Ladungen an folgenden Stellen des Systems auftreten.

Durch die Reibung zwischen Band und Führungselementen entsteht Reibungselektrizität oder elektrische Influenz und beide Körper, Band und Führungselement, werden elektrostatisch aufgeladen. Dabei kann diese Ladung auch zusätzlich auf jedem Körper durch Trennung der sowieso vorhandenen Ladungsmengen entstehen.

Durch die Trennung des Magnetbandes von der äußeren Bandwindung der Abwickelrolle kann außerdem eine Ladungstrennung zwischen abgezogenem Band und zurückbleibender äußerer Bandwindung erfolgen, so daß eine Kontaktspannung entsteht. Im Normalfall werden positive und negative Ladungsmengen getrennt, die auf den entsprechenden Bandstellen weitertransportiert werden.

In beiden Fällen handelt es sich um nicht unterscheidbare elektrostatische Ladungserzeugung oder - trennung und damit ist diese auch von der Dielektrizitätskonstanten des Materials bestimmt. Dabei wird das Material mit der größten relativen Dielektrizitätskonstanten positiv geladen.

Ein wichtiger Faktor hat dabei Bedeutung, die Ladungsaffinität, durch die bestimmt wird, auf welcher Oberfläche welchen Körpers zu welchem Zeitpunkt eine größere oder kleinere Ladungsmenge vorhanden ist.

Die Ladungsaffinität kann im sogenannten Abreißversuch bestimmt werden, wenn Kontaktplatten, mit den zu prüfenden Materialstreifen versehen, in Kontakt gebracht und auseinandergerissen werden, wobei dann die entstehende Abreißspannung gemessen wird.

Die vorstehenden Betrachtungen über die Erzeugung und Verteilung auftretender elektrostatischer Ladungen erheben keinen Anspruch auf Vollständigkeit oder unbedingter Korrektheit, da es bekannterweise äußerst schwierig ist, die Herkunft und/oder die Größe solcher Ladungen zu bestimmen, da elektrostatische Ladungen überall vorhanden sein können und damit die Messungen unvermeidbar beeinflußt werden.

Weitere Vorteile und Einzelheiten der Erfindung werden nachfolgend anhand von in der Zeichnung dargestellten Ausführungsbeispielen beschrieben.

In der Zeichnung ist dargestellt in :

Figur 1   eine übliche Magnetbandtransportanordnung

Figur 2   eine Motorstromaufnahme-Schaltung

Figur 3   eine Bandführungsanordnung in einer Magnetbandkassette

3

Figur 3A ein Motor-Last-Diagramm eines Chromdioxid-Magnetbandes in der Führungsordnung gemäß Figur 3 mit bekannten Führungselement-Materialien

Figur 3B ein Motor-Last-Diagramm desselben Magnetbandes in derselben Führungsanordnung jedoch ausschließblich mit Kunststoff-Kontaktteilen

Figur 4B ein Motor-Last-Diagramm gemäß Figur 4A, jedoch mit Kunststoff bzw. Graphit-Kunststoff als Kontaktteil-Materialien.

Figur 5A, 5B und 6 Schemazeichnungen zur jeweiligen Ladungsverteilung.

Eine Magnetbandanordnung 4 besteht im wesentlichen aus einem Magnetband 5 mit Schichtseite S und Trägerseite F, das von einer Abwickelrolle 6 auf einer Spule 7 zu einer Aufwickelrolle 8 auf einer Spule 9 oder umgekehrt gewickelt wird.

Auf dem Weg von der Rolle 6 zur Rolle 7 wird das Band über Bandführungselemente 10 und 20, im allgemeinen Führungsrollen oder -zapfen, bewegt, wobei zwischen den Elementen üblicherweise der Kontakt mit dem hier nicht dargestellten Magnetkopf stattfindet. Je nachdem, in welchem Winkel das Band 5 die Führungselemente umschlingt, sind die Kontaktteile zwischen Band 5 und Element 10 oder 20 verschieden groß.

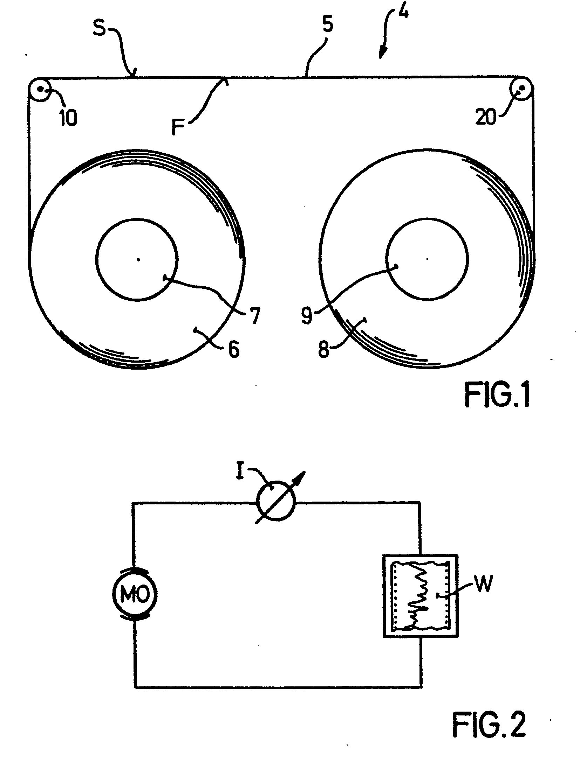

In Figur 2 ist eine Prinzipschaltung für die Motor-Last-Messung gezeigt, mit der die Stromaufnahme des Antriebmotors MO für den Bandtransport ermittelt, auf dem Instrument I angezeigt und mittels des Schreibers W festgehalten wird. Diese Meßschaltung ist unempfindlich gegen elektrostatische Fremdladungen, so daß sie für die Beurteilung von elektrostatischen Kleb- und Blockeffekten zur mittelbaren Bestimmung dieser Störungen sehr geeignet ist.

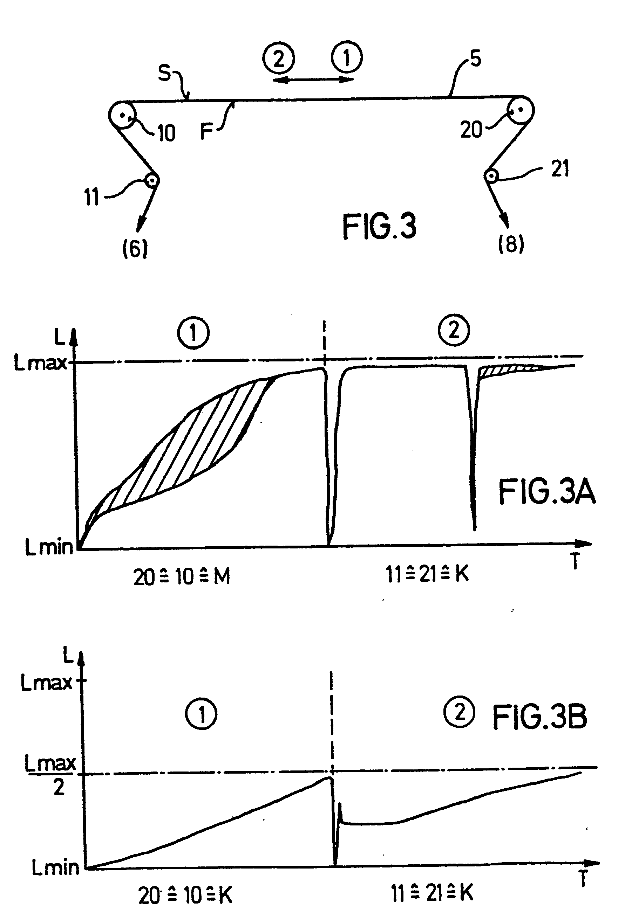

Figur 3 kann die Bandführungsanordnung in einer bekannten Videokassette (VHS-System) darstellen. Darin sind die Führungszapfen 10 und 20 und die Führungsrollen mit 11 bzw. 21 bezeichnet. Die Bandenden führen zu den Umfängen der hier nicht dargestellten Bandrollen 6 bzw. 8. Die Vorlauf- und Rücklaufrichtungen des Bandes 5 sind mit 1 bzw. 2 bezeichnet und auch in den folgenden Meßdiagrammen angegeben. Bei Umschaltung von der Vorlaufrichtung in die Rücklaufrichtung entsteht ein Strompegeleinbruch, der jeweils in den Diagrammen gezeigt ist.

Beim in allen folgenden Versuchsanordnungen benutzten Magnetband handelt es sich um ein handelsübliches Videomagnetband mit Chromdioxid-Magnetschicht, das einen Schichtwiderstand (Oblerflächenwiderstand gemessen mit Prüfkontakten auf der Schichtseite) von ca. $10^6 \, \Omega$ besitzt. Solche Chromdioxid-Bänder besitzen Schichtwiderstände im Bereich von etwa $10^5$ bis $5.10^7 \, \Omega$ je nach Art des Chromdioxid-Materials, Größe der Chromdioxid-Partikel, Füllungsgrad der Schicht, verwandten Schichtzusätzen, die die Ionenleitung erhöhen, sowie Bindemittel. Die Folie der Bänder hat einen üblichen Oberflächenwiderstand zwischen $10^{12} \, \Omega$ und $10^{14} \, \Omega$. Eine übliche Meßanordnung besteht aus einer zweiteiligen und zweipoligen Auflagefläche für das Band, das bei Messung plan aufliegt und einer Widerstands-Meßbrücke. Gemessen wird der auf eine quadratische Bandfläche bezogene Widerstandswert in $\Omega$.

Die bekannte Standard-Ausführung der Fürungselemente 10 und 20 bzw. 11 und 21 ist folgende : 10 und 20 sind Metallhülsen, die auf kassettenfesten Kunststoffachsen angeordnet sind (Kurzbezeichnung in der Zeichnung ist 10= 20= M (Metall)), 21 ist eine Kunststoff-Rolle, z. B. aus Polyoxymethylen-Material (Kurzbezeichnung in der Zeichnung ist 21 = K (Kunststoff)). 11 ist üblicherweise ein Metallzapfen oder -stift.

Die in den jeweiligen Versuchsanordnungen benutzten Materialien sind in der Zeichnung angegeben. Als erstes Versuchsergebnis wurde Diagramms 3A erhalten. Bei den verwendeten Begriffen Vorlauf und Rücklauf handelt es sich um Umspulbetrieb in der Kassette mit einer Umspulgeschwindigkeit von ca. 0,8 m/sec.

Im Vorlaufbereich 1 war im schraffierten Bereich der sogenannten Geigenbogeneffekt als ohrenbetäubender Lärm zu hören. Dieser Effekt bestand aus vielen kurzzeitgen Blockierungen zwischen der Folienseite F des Bandes 5 und den Metallhülsen 10 und 20. Im schraffierten Bereich ergab sich im Diagramm ein ständiger Wechsel von ständigen Belastungsänderungen des Motors MO im wesentlichen etwa zwischen der Vollast Lmax und der halben Vollast Lmax/2.

Im Bereich 2, Rücklauf, trat ein Geigenbogeneffekt nicht auf, jedoch etwa in der Mitte der Rücklaufperiode ein kurzzeitiger Abfall und Wiederanstieg des Motorstroms.

Eine solche Führungsanordnung gemäß Figur 3A, ist für die Aufzeichnung von Signalen, gleich welcher Art, völlig ungeeignet.

In Figur 3B wurde die Versuchsanordnung durch Ersatz der Metallhülsen durch Kuntstoffhülsen 10 und 20 gegenüber der Anordnung in Figur 3A geändert. Der dargestellte Verlauf der Motorbelastung in Figur 3B zeigt eine etwa lineare Erhöhung des Motorstroms bis ca. Lmax/2 in beiden Vorlauf und Rücklaufbereichen. Damit ist die Laständerung des Antriebsmotors des Geräts immer noch zu hoch, obwohl ein Aufzeichnen/Wiedergeben von Signalen praktisch möglich war.

Bei der Auswertung dieser beiden negativen Versuchsergebnisse wurde folgende überraschende Erklärung gefunden.

In Figur 3A traten sowohl zwischen den Metallhülsen 10 und 20 und der Folienseite F des Bandes 5 als auch zwischen den Rollen 11 und 21 und der Schichtseite S des Bandes 5 hohe unterschiedliche statische Aufladungen auf, die in der Periode 1 zu einem ständigen Start-Stop-Blockverhalten des Bandes führten.

Diese unterschiedlichen Aufladungen liegen höchstwahrscheinlich in der sehr verschiedenen Ladungsaffinität an den Materialoberflächen der Kontaktteile begründet, deren Oberflächenwiderstände (OFW) in folgender Tabelle größenordnungsgemäß nebeneinandergestellt sind.

| Kontaktteil | OFW ($\Omega$) |
|---|---|
| Band — Schichtseite S | ca. $10^6$ |
| Band — Folienseite F | ca. $10^{14}$ |
| Zapfen 10 und 20 (Metallhülsen) | ca. 0 |
| Rollen 11 und 21 (Kunststoff) | ca. $10^{12}$ |

Also ergeben sich folgende OFW-Differenzwerte zwischen entsprechenden Kontaktteilen :

| Kontaktteile | OFW ($\Omega$) | Differenz ($\Omega$) |
|---|---|---|
| Folienseite F | $10^{14}$ | $10^{14}$ |
| M-Zapfen 10 und 20 | ca. 0 | |
| K-Rollen 11 und 21 | $10^{12}$ | $10^6$ |
| Schichtseite S | $10^6$ | |

Die Differenzen der Ladungen erwiesen sich somit als weit zu groß, wenn, wie angenommen, die Oberflächenwiderstände als Maß für die Ladungsaffinität auf diesen Oberflächen angesehen werden können, was physikalisch als zulässig zu betrachten und meßtechnisch besser erfaßbar ist. Bei der Ladungsaffinität spielt außer der jeweiligen relativen Dielektrizitätskonstanten auch die momentane Beschaffenheit der beteiligten Oberflächen eine wichtige Rolle. Dazu gehört auch, daß die Entfernbarkeit der Ladungen unterschiedlich ist, z. B. von Schicht- und Folienseite des Bandes ; dabei sind die Ladungen von der Folie praktisch schwieriger abführbar.

Im Beispiel 3B betrug demgegenüber — durch Ersatz der M-Zapfen 10 und 20 durch K-Zapfen 10 und 20 — die Differenz,

| Kontaktteile | OFW ($\Omega$) | Differenz ($\Omega$) |
|---|---|---|
| Folienseite F | $10^{14}$ | $10^2$ |
| K-Zapfen 10 und 20 | $10^{12}$ | |

wobei die K-Rollen 11 und 21 unverändert beibehalten wurden. Die entsprechend geringe Ladungsdifferenz erlaubt wenigstens einen kontinuierlichen Bandlauf, wenn auch unter ständig steigendem Leistungsbedarf. Es ist dafür wohl eine während der Vor- und Rücklaufperioden stark anwachsende Ladungsdifferenz verantwortlich.

Unter Ladungsdifferenz wird im vorhergesagten und im folgenden ein irgendwie gearteter Unterschied in einander gegenüberstehenden Ladungen verstanden. Die beschriebenen Effekte können sowohl durch ungleichnamige gleichgroße und verschiedengroße, als auch durch gleichnamige verschiedengroße Ladungsmengen verursacht werden. Über Änderungen der Feuchtigkeitswerte der Teile, auch der Luft können sich die Verhältnisse auch kurzzeitig völlig ändern.

Unter dieser Einschränkung sind Vergleichsversuche derselben Anordnungen mit Magnetbändern mit Eisenoxydschichten und OFW-Werten von $10^8$ bis $10^{10}$ Ω zu bewerten, die gegenüber vorstehenden Versuchen einen relativ ungestörten Bandablauf ergaben.

Relative Dielektrizitätskonstanten liegen für die üblichen Kunststoffmaterialien etwa zwischen 2 und 4, für Halbleiter zwischen 10 und 16 und für Leiter im Bereich gegen Unendlich.

In den Diagrammen 4A und 4B wurden die erfindungsgemäßen Erkenntnisse in die Praxis umgesetzt und folgende Ergebnisse erhalten :

Die Kunststoff-Rollen 11 und 21 wurden durch einen Metallzapfen 11 und eine Metallrolle 21 ersetzt unter Beibehaltung der drehfesten Kunststoff-Zapfen 10 und 20.

Als OFW-Differenz ergab sich nunmehr :

| Kontaktteile | OFW ($\Omega$) | Differenz ($\Omega$) |
|---|---|---|
| Schichtseite S | $10^6$ | |
| M-Zapfen bzw. Rolle | | $\cdot 10^6$ |
| 11, 21 | ca. 0 | |

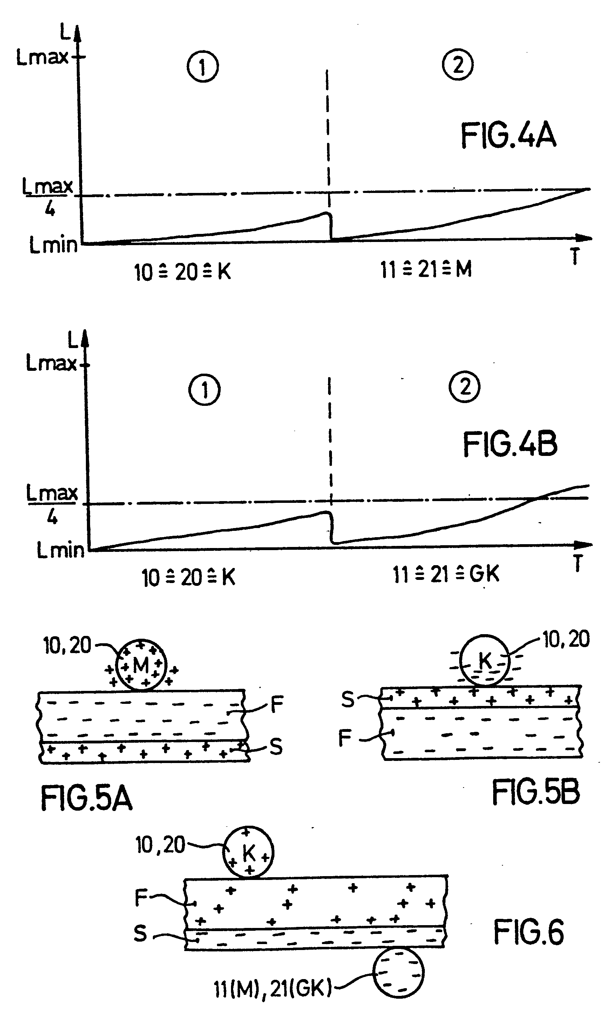

In Figur 4B wurde die Metallrolle 21 durch eine Graphit-Kunststoff-Rolle 21 ersetzt und ergab folgenden OFW-Differenzwert :

| Kontaktteile | OFW ($\Omega$) | Differenz ($\Omega$) |
|---|---|---|
| Schichtseite S | $10^6$ | |
| GK-Rolle 21 | $10^4$ | $10^2$ |

GK-Rolle 21 bestand aus einem Gemisch von 70 % oder 60 % eines Copolymers eines Polymethylenoxids (Handelsname Ultraform R, eingetragenes Warenzeichen der BASF Aktiengesellschaft, Ludwigshafen) und 30 % bzw. 40 % Graphit, vorzugsweise Naturgraphit. Als Kunststoffmaterial kann auch Polyethylen verwandt werden. Außer Graphit kann z. B. auch Kohle als Leitmittel benutzt werden. Es können z. B. auch Molybdänsulfit-Zusätze neben dem Graphit- oder Kohleanteil in der Mischung vorhanden sein, um die Gleitfähigkeit noch zu verbessern.

Es ergab sich in beiden Fällen der Figuren 4A und 4B der gegenüber Figur 3B halbe Leistungsbedarf am Motor, so daß auch etwa eine Halbeirung der wirksamen Ladungsmengen angenommen werden kann.

Trotz der relativen großen OFW-Differenzwerte spielen diese überraschenderweise eine weit geringere Rolle als im Bereich der Nichtleiter (s. im Ergebnis der Figur 3B im Bereich zwischen $10^{12}$ und $10^{14}$ $\Omega$). Als günstiger Bereich für Führungselement-Materialien für die Band-Schichtseite wird daher der Bereich von 0 bis $10^{10}$ $\Omega$ (dem OFW-Höchstwert eines $Fe_2O_3$-Magnetbandes gemäß DIN 45512) angesehen. Vorzugsweise sind Materialien mit OFW-Werten bis $10^7$ $\Omega$ für Führungselement für Chromdioxidbänder geeignet. Der Vorzugsbereich für die Folienseite für alle Bandarten beginnt bei ca. $10^{11}$ $\Omega$ und setzt sich nach oben bis ca. $10^{16}$ $\Omega$ fort. Im folgenden wird anhand der Schema-Skizzen in Figur 5 eine Erklärung des Blockeffekts in Figuren 3A und 3B versucht :

Infolge der Reibung der Folienseite F an den Metallzapfen 10 und 20 gibt das Metall große Mengen freier Elektronen an die Folie F ab und wird dadurch selbst positiver. Infolge der einander gegenüberstehenden ungleichnamigen Ladungen tritt ein Blockeffekt auf. Im Fall Figur 5B treten freie Elektronen — allerdings in geringerer Zahl als in 5A diesmal aus der Schichtseite S aus und gelangen zur Oberfläche der Kunststoffzapfen 10 und 20. Durch Anziehung der unterschiedlichen Ladungsmengen tritt der Blockeffekt in geringerem Maße auf als bei 5A.

Zusätzlich muß in beiden Fällen angenommen werden, daß aufgrund der Trennung des Bandes vom Wickel von einer sowieso erhöhten Ladungsmenge auf der Folie F ausgegangen werden muß, die den Block- oder Klebeeffekt noch weiter verstärkt.

So ist es sehr wahrscheinlich, daß im Diagramm 3A die Folie F negative Ladungen mitführt, die am Metallzapfen 10 abgestreift und nach Art eines Kondensators gespeichert werden, während sich auf der besser leitenden Schicht entsprechende positive Ladungen ansammeln, wodurch relativ starke elektrostatische Anziehungskräfte zwischen Zapfen 10 und Schicht S entstehen.

Figur 6 zeigt die wahrscheinlichen Ladungsverhältnisse der Anordnung, deren Ergebnisse in Figuren 4A und 4B dargestellt sind.

Der Kunststoff-Zapfen 10, 20 an der Folienseite F trägt geringe positive Ladung wie auch die Folie selbst, so daß höchstens geringe Abstoßkräfte, die eher erwünscht sind als Anziehungskräfte, auftreten.

Gleitartige Verhältnisse treten im Falle der Graphit-Kunststoff-Rolle 21 und des Metallzapfens 11 auf, nur mit einander gegenüberstehender negativer Ladung.

**Patentansprüche**

1. Bandführungsvorrichtung für Magnetbänder, insbesondere Videomagnetbänder, bestehend aus mindestens zwei elektrisch voneinander isolierten Bandführungselementen (z. B. 10, 11), die mit der Folienseite (F) bzw. mit der Schichtseite (S) des Magnetbandes wenigstens teilweise in Kontakt stehen, wobei das Magnetband eine Folienseiten-Ladungsaffinität und eine Schichtseiten-Ladungsaffinität aufweist, dadurch gekennzeichnet, daß der Bandfolienseite (F) zugeordnete Kontaktteile des/der Bandführungselements/Bandführungselemente (10, 20) aus einem Material bestehen, das an der Oberfläche eine der Folienseiten-Ladungsaffinität im wesentlichen entsprechende Ladungsaffinität besitzt und daß der Bandschichtseite (S) zugeordnete Kontaktteile des/der zweiten Bandführungselements/Bandführungselemente (11, 21) von Masse isoliert sind und aus einem Material bestehen, das an der Oberfläche eine höchstens der Schichtseiten-Ladungsaffinität entsprechende Ladungsaffinität aufweist.

2. Bandführungsvorrichtung nach Anspruch 1, dadurch gekennzeichnet, daß die Kontaktteile des/der Führungselements/Führungselemente für die Bandfolienseite aus einem an der Oberfläche gut isolierenden Material bestehen und daß die Kontaktteile des/der Bandführungselements/Bandführungselemente für die Bandschichtseite aus einem an der Oberfläche leitenden oder schlecht isolierenden Material gebildet sind.

3. Bandführungsvorrichtung nach Anspruch 1, dadurch gekennzeichnet, daß die Oberflächenwiderstände des Materials der Kontaktteile des/der ersten Bandführungselements/Bandführungselemente und der Folienseite sich etwa entsprechen und in einem Widerstandsbereich von mindestens $10^{11}$ $\Omega$ bis $10^{16}$ $\Omega$ liegen und daß die Oberflächenwiderstände des Materials der Kontaktteile des/der zweiten Bandführungselements/Bandführungselemente in einem Widerstandsbereich von 0 $\Omega$ bis $10^{10}$ $\Omega$ liegen.

4. Vorrichtung nach Anspruch 1 bis 3, dadurch gekennzeichnet, daß die Kontaktteile des/der Bandführungselements/Bandführungselemente (11, 21) für die Bandschichtseite (S) aus nicht gut leitendem Material mit einem Oberflächenwiderstand im Bereich bis $10^5$ $\Omega$ bestehen.

5. Vorrichtung nach Anspruch 1 bis 4, dadurch gekennzeichnet, daß die der Bandschichtseite zugeordneten Kontaktteile des/der zweiten Bandführungselements/Bandführungselemente (11, 21) aus einem mit elektrisch leitendem Zusatzmittel wie Graphit oder Kohle versehenen Kunststoffmaterial ausgebildet sind.

6. Vorrichtung nach Anspruch 5, dadurch gekennzeichnet, daß das Kunststoffmaterial aus 80 bis 50 Gew.-% aus Polyethylen oder Polypropylen oder vorzugsweise Polyoxymethylen mit einem Zusatz von 20 bis 50 Gew.-% Graphit oder Kohle besteht.

7. Vorrichtung nach Anspruch 1 bis 6, dadurch gekennzeichnet, daß die der Bandschichtseite (S) zugeordneten Kontaktteile (11, 21) aus einem oberflächenwiderstandsmäßig gleichen Material wie die Bandschicht, insbesondere aus Chromdioxid-Magnetteilchen in einem Bindemittel bestehen.

8. Vorrichtung nach Anspruch 1 bis 7, dadurch gekennzeichnet, daß die Kontaktteile aus etwa demselben Kunststoffmaterial wie die Folie des Bandes bestehen.

9. Magnetbandkassette mit Bandführungsvorrichtung nach Anspruch 1 mit Bandführungselementen für die Bandschichtseite und für die Bandfolienseite, dadurch gekennzeichnet, daß die Kontaktteile des/der Führungselements/Führungselemente (11, 21) für die Bandschichtseite (S) aus einem leitenden oder schlecht isolierenden Material mit einem Oberflächenwiderstand von 0 $\Omega$ bis $10^{10}$ $\Omega$ bestehen und die Kontaktteile des/der Führungselements/Führungselemente (10, 20) für die Bandfolienseite (F) aus einem gut isolierenden Material mit einem Oberflächenwiderstand im Bereich von mindestens $10^{11}$ $\Omega$ bis $10^{16}$ $\Omega$ bestehen.

10. Bandführungselemente, dazu bestimmt, mit der Folienseite bzw. mit der Schichtseite eines Magnetbandes wenigstens teilweise in Kontakt zu stehen, zur Verwendung in einer Bandführungsvorrichtung nach Anspruch 1 und 2 oder 9, dadurch gekennzeichnet, daß die Kontaktteile (11, 21) für die Bandschichtseite (S) aus nicht metallischem Material mit einem Oberflächenwiderstand im Bereich bis $10^5$ $\Omega$ und die Kontaktteile (10, 20) für die Bandfolienseite (F) aus isolierendem Material bestehen.

11. Bandführungselemente nach Anspruch 10, dadurch gekennzeichnet, daß die der Bandschichtseite (S) zugeordneten Kontaktteile (11, 21) aus einem mit elektrisch leitendem Zusatzmaterial wie Graphit oder Kohle versehenen Kunststoffmaterial ausgebildet sind.

12. Bandführungselemente nach Anspruch 11, dadurch gekennzeichnet, daß das Kunststoffmaterial aus 80 bis 50 Gewichtsprozent Polyethylen oder Polypropylen oder vorzugsweise Polyoxymethylen mit einem Zusatz von 20 bis 50 Gewichtsprozent Graphit oder Kohle besteht.

13. Bandführungselemente nach Anspruch 10, dadurch gekennzeichnet, daß die der Bandschichtseite (S) zugeordneten Kontaktteile (11 bzw. 21) von Masse isoliert sind und aus einem oberflächenwiderstandsmäßig gleichen Material wie die Bandschicht, insbesondere aus Chromdioxid-Magnetteilchen in einem Bindemittel, bestehen.

14. Bandführungselemente nach Anspruch 10 oder 13, dadurch gekennzeichnet, daß die der Bandfolienseite (F) zugeordneten Kontaktteile (10 bzw. 20) von Masse isoliert sind und mit einem Folienmaterial versehen sind, das in Bezug auf die Ladungsaffinität dem Folienmaterial des Magnetbandes im wesentlichen entspricht.

**Claims**

1. A tape guide system for magnetic tapes, especially video tapes, comprising at least two tape guide elements (e. g. 10, 11) which are electrically insulated from one another and are, respectively, at least partially in contact with the film face (F) and coated face (S) of the magnetic tape, the film face and the coated face having different charge affinities, wherein the contact members of the tape guide element(s) (10, 20) allotted to the film face (F) consist of a material which has, at the surface, essentially the same charge affinity as the charge affinity of the film face, and the contact members of the second tape guide element(s) (11, 21) allotted to the coated face (S) are insulated from the chassis and consist of a material which has, at the surface, a charge affinity which is not higher than the charge affinity of the coated face.

2. A tape guide system as claimed in claim 1, wherein the contact members of the guide element(s) allotted to the film face of the tape consist of a material which, at the surface, is a good insulator, and the contact members of the guide element(s) allotted to the coated face of the tape consist of a material which, at the surface, is conductive or a poor insulator.

3. A tape guide system as claimed in claim 1, wherein the surface resistances of the material of the contact members of the first tape guide element(s), and of the film face are approximately the same and range from at least $10^{11}$ $\Omega$ to about $10^{16}$ $\Omega$, and the surface resistance of the material of the contact members of the second tape guide element(s) ranges from 0 $\Omega$ to 10 $\Omega$.

4. A system as claimed in claims 1 to 3, wherein the contact members of the tape guide element(s) (11, 21) allotted to the coated face (S) consist of a material of poor conductivity having a surface resistance of up to $10^5$.

5. A system as claimed in claims 1 to 4, wherein the contact members of the second tape guide element(s) (11, 21) allotted to the coated face of the tape consist of a plastics material containing an electrically conductive additive such as graphite or carbon.

6. A system as claimed in claim 5, wherein the plastics material consists of from 80 to 50 % by weight of polyethylene, polypropylene or, preferably, polyoxymethylene and from 20 to 50 % by weight of graphite or carbon additive.

7. A system as claimed in claims 1 to 6, wherein the contact members (11, 21) allotted to the coated face (S) of the tape consist of a material having the same surface resistance as the magnetic coating, especially a coating of chromium dioxide magnetic particles in a binder.

8. A system as claimed in claims 1 to 7, wherein the contact members consist of essentially the same plastics material as the film base of the tape.

9. A magnetic tape cassette having a tape guide system, as claimed in claim 1, comprising tape guide elements allotted, respectively, to the coated face and film face of the tape, wherein the contact members of the guide element(s) (11, 21) allotted to the coated face (S) of the tape consist of a material which is conductive or a poor insulator and has a surface resistance of from 0 $\Omega$ to $10^{10}$ $\Omega$, and the contact members of the guide element(s) (10, 20) allotted to the film face (F) of the tape consist of a material which is a good insulator and has a surface resistance of from at least $10^{11}$ $\Omega$ to about $10^{16}$ $\Omega$.

10. Tape guide elements, intended to make at least partial contact with the film face and coated face of a magnetic tape, respectively, for use in a tape guide system as claimed in claims 1 and 2 or claim 9, wherein the contact members (11, 21) allotted to the coated face (S) of the tape consist of a nonmetallic material having a surface resistance of up to $10^5$ $\Omega$, and the contact members (10, 20) allotted to the film face (F) of the tape consist of an insulating material.

11. Tape guide elements as claimed in claim 10, wherein the contact members (11, 21) allotted to the coated face (S) of the tape consist of a plastics material containing an electrically conductive additive such as graphite or carbon.

12. Tape guide elements as claimed in claim 11, wherein the plastics material consists of from 80 to 50 % by weight of polyethylene, polypropylene or, preferably, polyoxymethylene and from 20 to 50 % by weight of graphite or carbon additive.

13. Tape guide elements as claimed in claim 10, wherein the contact members (11, 21) allotted to the coated face (S) of the tape are insulated from the chassis and consist of a material having the same surface resistance as the magnetic coating, especially a coating of chromium dioxide magnetic particles in a binder.

14. Tape guide elements as claimed in claim 10 or 13, wherein the contact members (10, 20) allotted to the film face (F) are insulated from the chassis and are provided with a film material whose charge affinity is essentially the same as that of the film material of the magnetic tape.

**Revendications**

1. Dispositif de guidage de bande pour bandes magnétiques, en particulier bandes magnétiques vidéo, constitué d'au moins deux éléments de guidage de bande (par exemple 10, 11) isolés électriquement l'un de l'autre, qui restent en contact, au moins partiellement, avec le côté feuille (F) ou le côté couche (S) de la bande magnétique, la bande magnétique ayant une aptitude à la charge côté feuille et une aptitude à la charge côté couche, caractérisé par le fait que les zones de contact, associées au côté feuille (F) de la bande, avec le (ou les) élément(s) de guidage de bande (10, 20) sont en une matière qui possède, en surface, une aptitude à la charge correspondant sensiblement à l'aptiude à la charge du côté feuille et que les zones de contact, associées au côté couche (S) de la bande, avec le (les) élément(s) de guidage de bande (11, 21) sont isolées de la masse et sont en une matière qui possède, en surface, une aptitude à la charge correspondant au maximum à l'aptitude à la charge du côté couche.

2. Dispositif de guidage de bande selon la revendication 1, caractérisé par le fait que les zones de

8

contact de (des) élément(s) de guidage pour le côté feuille de la bande sont en une matière bien isolante en surface et que les zones de contact de (des) élément(s) de guidage pour le côté couche de la bande sont formées d'une matière conductrice ou mauvaise isolante en surface.

3. Dispositif de guidage de bande selon la revendication 1, caractérisé par le fait que les résistances superficielles du matériau des zones de contact de (des) premier(s) élément(s) de guidage de bande et du côté feuille se correspondent à peu près et sont comprises dans un domaine de résistances d'au moins $10^{11} \Omega$ à $10^{16} \Omega$ et que les résistances superficielles du matériau des zones de contact du (des) second(s) élément(s) de guidage de bande sont situées dans un domaine de résistances de $0 \Omega$ à $10^{10} \Omega$.

4. Dispositif selon l'une des revendications 1 à 3, caractérisé par le fait que les zones de contact du (des) élément(s) de guidage de bande (11, 21) pour le côté couche (S) de la bande sont en une matière qui n'est pas bonne conductrice, et d'une résistance superficielle comprise dans un domaine allant jusqu'à $10^5 \Omega$.

5. Dispositif selon l'une des revendications 1 à 4, caractérisé par le fait que les zones de contact, associées au côté couche (S) de la bande, de l'(des) élément(s) de guidage de bande (11, 21) sont en une matière plastique munie d'additifs conducteurs de l'électricité, tels que graphite ou charbon.

6. Dispositif selon la revendication 5, caractérisé par le fait que la matière plastique est consituée par 80 à 50 % en poids de polyéthylène ou polypropylène ou, avantageusement, de polyoxyméthylène avec une addition de 20 à 50 % en poids de graphite ou charbon.

7. Dispositif selon l'une des revendications 1 à 6, caractérisé par le fait que les zones de contact (11, 21) associées au côté couche (S) de la bande sont constituées d'une même matière, au point de vue résistance superficielle, que la couche de bande, en particulier de particules magnétiques de dioxyde de chrome dans un liant.

8. Dispositif selon l'une des revendications 1 à 7, caractérisé par le fait que les zones de contact sont constituées d'une matière plastique à peu près identique à celle de la feuille de bande.

9. Cassette de bande magnétique à dispositif de guidage de bande selon la revendication 1, muni d'éléments de guidage de bande pour le côté couche de la bande et pour le côté feuille de la bande, caractérisée par le fait que les zones de contact du (des) élément(s) de guidage de bande (11, 21) pour le côté couche (S) de la bande sont en une matière conductrice ou mauvaise isolante et d'une résistance superficielle de $0 \Omega$ à $10^{10} \Omega$ et les zones de contact de (des) élément(s) de guidage de bande (10, 20) pour le côté feuille (F) de la bande sont en une matière bonne isolante ayant une résistance superficielle comprise entre au moins $10^{11} \Omega$ et $10^{16} \Omega$.

10. Eléments de guidage de bande destinés à être en contact, au moins partiellement, avec le côté feuille ou le côté couche, respectivement, d'une bande magnétique, pour utilisation dans un dispositif de guidage de bande selon la revendication 1 et 2 ou 9, caractérisé par le fait que les zones de contact (11, 21) pour le côté couche (S) de la bande sont en matière non métallique d'une résistance superficielle dans le domaine allant jusqu'à $10^5 \Omega$ et les zones de contact (10, 20) pour le côté feuille (F) de la bande sont en matière isolante.

11. Eléments de guidage de bande selon la revendication 10, caractérisés par le fait que les zones de contact, associées au côté couche (S) de la bande (11, 21) sont en une matière plastique munie d'additifs conducteurs de l'électricité, tels que graphite ou charbon.

12. Eléments de guidage de bande selon la revendication 11, caractérisés par le fait que la matière plastique est consituée par 80 à 50 % en poids de polyéthylène ou polypropylène ou, avantageusement, de polyoxyméthylène avec une addition de 20 à 50 % en poids de graphite ou charbon.

13. Eléments de guidage de bande selon la revendication 10, caractérisés par le fait que les zones de contact (11, 21) associées au côté couche (S) de la bande sont isolées de la masse et sont constituées d'une même matière, au point de vue résistance superficielle, que la couche de bande, en particulier de particules magnétiques de dioxyde de chrome dans un liant.

14. Eléments de guidage de bande selon la revendication 10 ou 13, caractérisés par le fait que les zones de contact (10 ou 20) associées au côté feuille (F) de la bande sont isolées de la masse et sont munies d'une matière de feuille qui correspond, sensiblement, en ce qui concerne l'aptitude à la charge, à celle de la matière de feuille de la bande magnétique.

FIG.1

FIG.2

FIG.3

FIG.3A

$20 \cong 10 \cong M$        $11 \cong 21 \cong K$

FIG.3B

$20 \cong 10 \cong K$        $11 \cong 21 \cong K$

FIG.4A

$L_{max}$, $\dfrac{L_{max}}{4}$, $L_{min}$

① ②

$10 \cong 20 \cong K$     $11 \cong 21 \cong M$

FIG.4B

$L_{max}$, $\dfrac{L_{max}}{4}$, $L_{min}$

① ②

$10 \cong 20 \cong K$     $11 \cong 21 \cong GK$

10, 20 — M — F — S

FIG.5A

10, 20 — K — S — F

FIG.5B

10, 20 — K — F — S

FIG.6

11(M), 21(GK)

3